# EUROPEAN PATENT APPLICATION

(11) **EP 3 849 160 A1**
(43) Date of publication of application: **14.07.2021**
(21) Application number: 19864346.2
(22) Date of filing: 11.09.2019
(51) Int. Cl.: H04L 29/10, H04L 12/709, H04L 12/803, H04L 12/823

(54) **METHOD, DEVICE AND SYSTEM FOR REALIZING DATA TRANSMISSION**

(30) Priority: 25.09.2018 CN 201811114523
(71) Applicant: HUAWEI TECHNOLOGIES CO., LTD., Shenzhen, Guangdong 518129 (CN)
(72) Inventor: QU, Xiaoyang, Shenzhen, Guangdong 518129 (CN); HUANG, Zhigang, Shenzhen, Guangdong 518129 (CN); CHEN, Guang, Shenzhen, Guangdong 518129 (CN); FU, Qiujie, Shenzhen, Guangdong 518129 (CN)
(74) Representative: Gill Jennings & Every LLP
(86) International application number: PCT/CN2019/105255
(87) International publication number: WO 2020/063339

(57) **Abstract**

Embodiments of this application disclose a data transmission method, an apparatus, and a system. The method includes: obtaining, by a sending device, data packets of a target data flow; and sending the data packets of the target data flow to a receiving device through at least two physical links between the sending device and the receiving device in a load balancing mode, where each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow. Because the data packets of the target data flow are distributed to different physical links for sending, instead of being sent through one physical link, bandwidth provided by different physical links can be effectively used, and a packet loss rate is reduced.

## Description

### TECHNICAL FIELD

Embodiments of this application relate to the field of communications technologies, and in particular, to a data transmission method, an apparatus, and a system.

### BACKGROUND

Currently, video services having a high bit rate become increasingly popular, such as a 4K/8K internet protocol television (Internet Protocol Television, IPTV) service and a virtual reality (Virtual Reality, VR) video service.

Videos provided by these services have a high bit rate and require an extremely low packet loss rate. For example, a bit rate of a video provided by the 8K video service can reach 40 Mbps. When the packet loss rate is 0.1%, a user can notice obvious video freezing. Therefore, for such services, the key to service experience is to ensure sufficient and stable bandwidth to eliminate a packet loss caused by burst traffic or unstable bandwidth in the network.

In the prior art, data is transmitted between different communications devices through one physical link. When burst traffic exists in a data flow between the two communications devices or bandwidth is unstable due to electromagnetic wave interference, actual transmitted data traffic usually exceeds maximum bandwidth that can be provided by the physical link, causing an increase in a packet loss rate.

### SUMMARY

Embodiments of this application provide a data transmission method, an apparatus, and a system, to reduce a packet loss rate during data transmission.

According to a first aspect, a data transmission method is provided. The method includes: obtaining, by a sending device, data packets of a target data flow; and sending, by the sending device, the data packets of the target data flow to a receiving device through at least two physical links between the sending device and the receiving device in a load balancing mode, where each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow, for example, is used to perform, in an ordering process, out-of-order detection on the data packets that are received from different physical links and that belong to the target data flow. The at least two physical links may be both wired links, for example, Ethernet links, or may be both wireless links, for example, wireless local area network (Wireless Local Area Networks, WLAN) links, or may include a wired link and a wireless link. It should be noted that the at least two physical links may be all or some of physical links established between the sending device and the receiving device.

According to an implementation of the first aspect, the data packets of the target data flow are distributed to different physical links for sending, instead of being sent through one physical link, so that bandwidth provided by different physical links can be effectively used, and a packet loss rate is reduced.

In a first implementation of the first aspect, each data packet that is of the target data flow and that is sent by the sending device in the load balancing mode further carries a subsequence number, and data packets of the target data flow that are sent through any one of the at least two physical links have consecutive subsequence numbers. The subsequence number may be used by the receiving device to perform packet loss detection on the received data packets of the target data flow.

When two data packets that are successively received by the receiving device and that belong to the target data flow have inconsecutive primary sequence numbers, a disorder may occur, or a packet loss may occur. Usually, a disorder does not occur between data packets transmitted through a single physical link. Therefore, if the two data packets are transmitted through a same physical link and have inconsecutive subsequence numbers, it may be determined, based on this, that a packet loss occurs between the two data packets, and a disorder does not necessarily occur. Therefore, a combination of the subsequence number and the primary sequence number may be used for more accurate out-of-order detection.

According to the first aspect or the first implementation of the first aspect, in a second implementation of the first aspect, the primary sequence number of each data packet of the target data flow is carried in an extension header between a data link layer header and a network layer header that are of the data packet. Alternatively, the subsequence number of each data packet of the target data flow may also be carried in the extension header of the data packet.

Because the subsequence number is carried in the extension header between the data link layer header and the network layer header, the subsequence number is compatible with different network layer protocols at an upper layer and different data link layer protocols at a lower layer. Therefore, compatibility is relatively strong. In addition, existing processing logic at a data link layer and processing logic at a network layer in the sending device and the receiving device are not changed, and are easy to implement.

According to the first aspect or the first or the second implementation of the first aspect, in a third implementation of the first aspect, the sending device may dynamically adjust a data amount that is of the target data flow and that is sent through each physical link. Specifically, the data amount may be adjusted based on a transmission rate of the target data flow in a statistics period, or may be adjusted based on load information of each of the plurality of physical links, or may be adjusted based on a transmission rate of the target data flow in a statistics period and load information of each of the plurality of physical links.

The transmission rate of the target data flow in the statistics period reflects a traffic burst case in the statistics period. The load information of each of the plurality of physical links reflects a load status of each physical link. The traffic burst case and/or the load status of each physical link are/is considered during adjustment. Therefore, load balancing can be performed more accurately, and a packet loss rate is further reduced.

According to the third implementation of the first aspect, in a fourth implementation of the first aspect, the load information of each physical link includes predicted queue utilization, obtained after preset duration, of a data sending queue that is of the physical link and that is corresponding to the target data flow.

According to this implementation, adjustment is performed based on the predicted queue utilization of each physical link that is obtained after preset duration. Because queue utilization at a next moment is considered, load balancing can be performed more accurately, and a packet loss rate is further reduced.

According to a second aspect, a data transmission method is provided. The method includes: receiving, by a receiving device through at least two physical links between the receiving device and a sending device, data packets of a target data flow that are sent by the sending device through the at least two physical links in a load balancing mode, where each data packet that is of the target data flow and that is sent by the sending device in the load balancing mode carries a primary sequence number, and the data packets of the target data flow that are sent by the sending device have consecutive primary sequence numbers; and ordering, by the receiving device, received data packets of the target data flow based on primary sequence numbers of the received data packets of the target data flow. In an ordering process, out-of-order detection may be specifically performed on the target data flow based on the primary sequence numbers of the received data packets of the target data flow, and the received data packets of the target data flow are ordered based on an out-of-order detection result.

According to an implementation of the second aspect, the data packets of the target data flow are distributed to different physical links for sending, instead of being sent through one physical link, so that bandwidth provided by different physical links can be effectively used, and a packet loss rate is reduced.

According to the second aspect, in a first implementation of the second aspect, the primary sequence number of each data packet of the target data flow is carried in an extension header between a data link layer header and a network layer header that are of the data packet. Alternatively, the subsequence number of each data packet of the target data flow may also be carried in the extension header of the data packet.

Because the subsequence number is carried in the extension header between the data link layer header and the network layer header, the subsequence number is compatible with different network layer protocols at an upper layer and different data link layer protocols at a lower layer. Therefore, compatibility is relatively strong. In addition, existing processing logic at a data link layer and processing logic at a network layer in the sending device and the receiving device are not changed, and are easy to implement.

According to the second aspect or the first implementation of the second aspect, in a second implementation of the second aspect, the receiving device may specifically perform out-of-order detection on the target data flow based on the primary sequence numbers of the received data packets of the target data flow, and order the received data packets of the target data flow based on the out-of-order detection result.

Some data packets of the target data flow are transmitted through a same physical link, and some data packets are transmitted through different physical links. According to this implementation, the primary sequence numbers are used to perform out-of-order detection on data packets of the target data flow that are received through each physical link, and ordering is performed based on a detection result, so that ordering can be implemented accurately and efficiently.

According to the second implementation of the second aspect, in a third implementation of the second aspect, in a process of performing out-of-order detection on the target data flow, for a currently received data packet (subsequently referred to as a current data packet), whether the current data packet is out of order may be determined based on a primary sequence number of the current data packet and a primary sequence number of a data packet (subsequently referred to as a reference data packet) that has a maximum primary sequence number in the target data flow and that is received before the current data packet is received. Specifically, when it is determined that the sending device sends, through a physical link different from a physical link used for sending the current data packet, a data packet that belongs to the target data flow and whose primary sequence number is greater than the primary sequence number of the reference data packet and less than the primary sequence number of the current data packet, it may be determined that the current data packet is out of order. To implement more accurate determining, whether a reorder buffer corresponding to the target data flow is empty when the current data packet is received may be first determined, and when it is determined that the reorder buffer corresponding to the target data flow is empty, the operation of determining, based on the primary sequence number of the current data packet and the primary sequence number of the reference data packet, whether the current data packet is out of order is performed. In addition, if the reorder buffer corresponding to the target data flow is not empty when the current data packet is received, it indicates that the current data packet is an out-of-order data packet, and may be a data packet that falls into a buffer hole of the reorder buffer, or may be a data packet after a last buffer hole of the reorder buffer. In this case, the current data packet may be directly added to the reorder buffer.

According to the third implementation of the second aspect, in a fourth implementation of the second aspect, when it is determined that the current data packet and the reference data packet have inconsecutive primary sequence numbers, it may be directly determined that the current data packet is out of order, and when it is determined that the current data packet and the reference data packet have consecutive primary sequence numbers, it is determined that the current data packet is not out of order. This implementation is relatively simple and less computing resources are consumed.

According to the third implementation of the second aspect, in a fifth implementation of the second aspect, to improve accuracy of out-of-order detection, the receiving device may first determine whether the current data packet and the reference data packet are from a same physical link and perform out-of-order detection in a corresponding manner.

If the current data packet and the reference data packet are from different physical links, when it is determined that the primary sequence number of the current data packet and the primary sequence number of the reference data packet are inconsecutive, it may be determined that the current data packet is out of order. The data packets of the target data flow are transmitted through different physical links, and a data packet that is earlier sent through a physical link may arrive after a data packet that is later sent through another physical link. Consequently, the data packets are out of order. According to this implementation, out-of-order detection is performed in consideration of whether primary sequence numbers of data packets that are successively received from different physical links are consecutive, so that the out-of-order detection result is more accurate.

Each data packet that is of the target data flow and that is sent by the sending device in the load balancing mode may further carry a subsequence number, and data packets of the target data flow that are sent through each physical link have consecutive subsequence numbers. If the current data packet and the reference data packet are from a same physical links, when it is determined that a difference between the primary sequence number of the current data packet and the primary sequence number of the reference data packet is greater than a difference between a subsequence number of the current data packet and a subsequence number of the reference data packet, it may be determined that the current data packet is out of order.

A disorder does not occur between data packets transmitted through a single physical link. Therefore, if the two data packets are transmitted through a same physical link and have inconsecutive subsequence numbers, it may be determined, based on this, that a packet loss occurs between the two data packets, and a disorder does not necessarily occur. Therefore, a combination of the subsequence number and the primary sequence number may be used for more accurate out-of-order detection.

According to a third aspect, a data transmission method is provided. The method includes:
sending, by a sending device, a start notification to a receiving device, where the start notification is used to notify the receiving device that a target data flow is to be sent through at least two physical links in a load balancing mode; and
obtaining, by the sending device, data packets of the target data flow, and sending the data packets of the target data flow to the receiving device through the at least two physical links in the load balancing mode after sending the start notification.

According to an implementation of the third aspect, the data packets of the target data flow are distributed to different physical links for sending, instead of being sent through one physical link, so that bandwidth provided by different physical links can be effectively used, and a packet loss rate is reduced.

According to a first implementation of the third aspect, each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow, for example, is used to perform, in an ordering process, out-of-order detection on the data packets that are received from different physical links and that belong to the target data flow. The start notification may include an initial primary sequence number, and the initial primary sequence number is a primary sequence number of the first data packet that belongs to the target data flow and that is sent by the sending device in the load balancing mode.

The data packets of the target data flow are transmitted through different physical links, and a data packet that is earlier sent through a physical link may arrive after a data packet that is later sent through another physical link. Consequently, the data packets are out of order. According to this implementation, ordering may be performed based on primary sequence numbers of the data packets received through different physical links, so as to implement order preserving of the target data flow.

According to the first implementation of the third aspect, in a second implementation of the third aspect, each data packet that is of the target data flow and that is sent by the sending device in the load balancing mode further carries a subsequence number, and data packets of the target data flow that are sent through any one of the at least two physical links have consecutive subsequence numbers. The start notification may further include an initial subsequence number, and an initial subsequence number corresponding to each physical link is a subsequence number of the first data packet that belongs to the target data flow and that is sent through the physical link.

When two data packets that are successively received by the receiving device and that belong to the target data flow have inconsecutive primary sequence numbers, a disorder may occur, or a packet loss may occur. Usually, a disorder does not occur between data packets transmitted through a single physical link. Therefore, if the two data packets are transmitted through a same physical link and have inconsecutive subsequence numbers, it may be determined, based on this, that a packet loss occurs between the two data packets, and a disorder does not necessarily occur. Therefore, a combination of the subsequence number and the primary sequence number may be used for more accurate out-of-order detection.

According to a fourth aspect, a data transmission method is provided. The method includes: receiving, by a receiving device, a start notification sent by a sending device; determining, based on the start notification, that the sending device is to send a target data flow through at least two physical links in a load balancing mode; receiving, through the at least two physical links, data packets of the target data flow that are sent by the sending device through the at least two physical links in the load balancing mode; and ordering the data packets of the target data flow that are received through the at least two physical links.

According to a first implementation of the fourth aspect, each data packet that is of the target data flow and that is sent by the sending device in the load balancing mode carries a primary sequence number, and data packets of the target data flow that are sent by the sending device have consecutive subsequence numbers. Correspondingly, the receiving device orders the received data packets of the target data flow based on primary sequence numbers of the received data packets of the target data flow, including performing out-of-order detection on data packets that are received from different physical links and that belong to the target data flow.

According to the first implementation of the fourth aspect, in a second implementation of the fourth aspect, each data packet that is of the target data flow and that is sent by the sending device in the load balancing mode further carries a subsequence number, and data packets of the target data flow that are sent through any one of the at least two physical links have consecutive subsequence numbers. Correspondingly, the receiving device specifically performs out-of-order detection on the data packets of the target data flow based on the primary sequence numbers and subsequence numbers of the received data packets of the target data flow.

According to a fifth aspect, a communications device is provided. The communications device includes an obtaining unit and a communications unit. The obtaining unit is configured to obtain data packets of a target data flow. The communications unit is configured to send the data packets of the target data flow to a receiving device through at least two physical links between the communications device and the receiving device in a load balancing mode, where each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow.

According to an implementation of the fifth aspect, the data packets of the target data flow are distributed to different physical links for sending, instead of being sent through one physical link, so that bandwidth provided by different physical links can be effectively used, and a packet loss rate is reduced.

In a first implementation of the fifth aspect, each data packet that is of the target data flow and that is sent by the communications device in the load balancing mode further carries a subsequence number, and data packets of the target data flow that are sent through any one of the at least two physical links have consecutive subsequence numbers. The subsequence number may be used by the receiving device to perform packet loss detection on the received data packets of the target data flow.

According to the fifth aspect or the first implementation of the fifth aspect, in a second implementation of the fifth aspect, the primary sequence number of each data packet of the target data flow is carried in an extension header between a data link layer header and a network layer header that are of the data packet. The subsequence number of each data packet of the target data flow may also be carried in the extension header of the data packet.

According to the fifth aspect or the first or the second implementation of the fifth aspect, in a third implementation of the fifth aspect, the communications device may dynamically adjust a data amount that is of the target data flow and that is sent through each physical link. Specifically, the data amount may be adjusted based on a transmission rate of the target data flow in a statistics period, or may be adjusted based on load information of each of the plurality of physical links, or may be adjusted based on a transmission rate of the target data flow in a statistics period and load information of each of the plurality of physical links.

According to the third implementation of the fifth aspect, in a fourth implementation of the fifth aspect, the load information of each physical link includes predicted queue utilization, obtained after preset duration, of a data sending queue that is of the physical link and that is corresponding to the target data flow.

According to a sixth aspect, a communications device is provided. The communications device includes a communications unit and a processing unit. The communications unit is configured to receive, through at least two physical links between the communications device and a sending device, data packets of a target data flow that are sent by the sending device through the at least two physical links in a load balancing mode, where each data packet that is of the target data flow and that is sent by the sending device in the load balancing mode carries a primary sequence number, and the data packets of the target data flow that are sent by the sending device have consecutive primary sequence numbers. The processing unit is configured to order, based on primary sequence numbers of data packets of the target data flow that are received by the communications unit, the received data packets of the target data flow.

According to a first implementation of the sixth aspect, the primary sequence number of each data packet of the target data flow is carried in an extension header between a data link layer header and a network layer header that are of the data packet. The subsequence number of each data packet of the target data flow may also be carried in the extension header of the data packet.

According to the sixth aspect or the first implementation of the sixth aspect, in a second implementation of the sixth aspect, the processing unit is specifically configured to: perform out-of-order detection on the target data flow based on the primary sequence numbers of the received data packets of the target data flow, and order the received data packets of the target data flow based on an out-of-order detection result.

According to the second implementation of the sixth aspect, in a third implementation of the sixth aspect, in a process in which the processing unit performs out-of-order detection on the target data flow, for a currently received data packet (subsequently referred to as a current data packet), whether the current data packet is out of order may be determined based on a primary sequence number of the current data packet and a primary sequence number of a data packet (subsequently referred to as a reference data packet) that has a maximum primary sequence number in the target data flow and that is received before the current data packet is received. Specifically, when it is determined that the sending device sends, through a physical link different from a physical link used for sending the current data packet, a data packet that belongs to the target data flow and whose primary sequence number is greater than the primary sequence number of the reference data packet and less than the primary sequence number of the current data packet, it may be determined that the current data packet is out of order. To implement more accurate determining, whether a reorder buffer corresponding to the target data flow is empty when the current data packet is received may be first determined, and when it is determined that the reorder buffer corresponding to the target data flow is empty, the operation of determining, based on the primary sequence number of the current data packet and the primary sequence number of the reference data packet, whether the current data packet is out of order is performed. In addition, if the reorder buffer corresponding to the target data flow is not empty when the current data packet is received, it indicates that the current data packet is an out-of-order data packet, and may be a data packet that falls into a buffer hole of the reorder buffer, or may be a data packet after a last buffer hole of the reorder buffer, in this case, the current data packet may be directly added to the reorder buffer.

According to the third implementation of the sixth aspect, in a fourth implementation of the sixth aspect, when it is determined that the current data packet and the reference data packet have inconsecutive primary sequence numbers, it may be directly determined that the current data packet is out of order, and when it is determined that the current data packet and the reference data packet have consecutive primary sequence numbers, it is determined that the current data packet is not out of order.

According to the third implementation of the sixth aspect, in a fifth implementation of the sixth aspect, to improve accuracy of out-of-order detection, the receiving device may first determine whether the current data packet and the reference data packet are from a same physical link and perform out-of-order detection in a corresponding manner.

If the current data packet and the reference data packet are from different physical links, when it is determined that the primary sequence number of the current data packet and the primary sequence number of the reference data packet are inconsecutive, it may be determined that the current data packet is out of order.

Each data packet that is of the target data flow and that is sent by the sending device in the load balancing mode may further carry a subsequence number, and data packets of the target data flow that are sent through each physical link have consecutive subsequence numbers. If the current data packet and the reference data packet are from a same physical links, when it is determined that a difference between the primary sequence number of the current data packet and the primary sequence number of the reference data packet is greater than a difference between a subsequence number of the current data packet and a subsequence number of the reference data packet, it may be determined that the current data packet is out of order.

According to a seventh aspect, a communications device is provided. The communications device includes an obtaining unit and a communications unit. The obtaining unit is configured to obtain data packets of a target data flow. The communications unit is configured to: send a start notification to a receiving device, where the start notification is used to notify the receiving device that a target data flow is to be sent through at least two physical links in a load balancing mode; and send the data packets of the target data flow to the receiving device through the at least two physical links in the load balancing mode after sending the start notification.

According to a first implementation of the seventh aspect, each data packet that is of the target data flow and that is sent by the communications unit in the load balancing mode carries a primary sequence number, the sent data packets of the target data flow have consecutive primary sequence numbers, and the primary sequence numbers are used by the receiving device to order data packets that are received from different physical links and that belong to the target data flow, for example, is used to perform, in an ordering process, out-of-order detection on the data packets that are received from different physical links and that belong to the target data flow. The start notification may include an initial primary sequence number, and the initial primary sequence number is a primary sequence number of the first data packet that belongs to the target data flow and that is sent by the sending device in the load balancing mode.

According to the first implementation of the seventh aspect, in a second implementation of the seventh aspect, each data packet that is of the target data flow and that is sent by the communications device in the load balancing mode further carries a subsequence number, and data packets of the target data flow that are sent through any one of the at least two physical links have consecutive subsequence numbers. The start notification may further include an initial subsequence number, and an initial subsequence number corresponding to each physical link is a subsequence number of the first data packet that belongs to the target data flow and that is sent through the physical link.

According to an eighth aspect, a communications device is provided. The communications device includes a communications unit and a processing unit. The communications unit is configured to: receive a start notification sent by a sending device, and receive, through at least two physical links between the communications device and the sending device, data packets of a target data flow that are sent by the sending device through the at least two physical links in a load balancing mode. The processing unit is configured to: determine, based on the start notification, that the sending device is to send the target data flow through the at least two physical links in the load balancing mode, and order received data packets of the target data flow.

According to a first implementation of the eighth aspect, each data packet that is of the target data flow and that is sent by the sending device in the load balancing mode carries a primary sequence number, and data packets of the target data flow that are sent by the sending device have consecutive subsequence numbers. Correspondingly, the processing unit orders the received data packets of the target data flow based on primary sequence numbers of the received data packets of the target data flow, including performing out-of-order detection on data packets that are received from different physical links and that belong to the target data flow.

According to the first implementation of the eighth aspect, in a second implementation of the fourth aspect, each data packet that is of the target data flow and that is sent by the sending device in the load balancing mode further carries a subsequence number, and data packets of the target data flow that are sent through any one of the at least two physical links have consecutive subsequence numbers. Correspondingly, the processing unit specifically performs out-of-order detection on the data packets of the target data flow based on the primary sequence numbers and subsequence numbers of the received data packets of the target data flow.

According to a ninth aspect, a communications system is provided. The communications system includes a sending device and a receiving device. The sending device may be the communications device according to any one of the fifth aspect or the implementations of the fifth aspect, and correspondingly, the receiving device may be the communications device according to any one of the sixth aspect or the implementations of the sixth aspect. Alternatively, the sending device may be the communications device according to any one of the seventh aspect or the implementations of the seventh aspect, and correspondingly, the receiving device may be the communications device according to any one of the eighth aspect or the implementations of the eighth aspect.

According to a tenth aspect, a computer readable storage medium is provided. The computer readable storage medium stores an instruction, and when the instruction is run on a computer, the computer is enabled to perform the methods according to the foregoing aspects.

According to an eleventh aspect, a computer program product including an instruction is provided. When the computer program product is run on a computer, the computer is enabled to perform the methods according to the foregoing aspects.

### BRIEF DESCRIPTION OF DRAWINGS

To describe the technical solutions in the embodiments of this application more clearly, the following briefly describes the accompanying drawings for describing the embodiments.
FIG. 1A to FIG. 1C are schematic diagrams of a networking structure of a communications system 100 according to an embodiment of this application;
FIG. 2 and FIG. 3 are schematic flowcharts of a method 100 according to an embodiment of this application;
FIG. 4A to FIG. 4C are schematic structural diagrams of a protocol according to an embodiment of this application;
FIG. 5 is a schematic diagram of a reorder buffer according to an embodiment of this application;
FIG. 6 is a schematic structural diagram of a communications device 200 according to Embodiment 2 of this application;
FIG. 7 is a schematic structural diagram of a communications device 300 according to Embodiment 3 of this application;
FIG. 8 is a schematic structural diagram of a communications device 1000 according to Embodiment 4 of this application; and
FIG. 9 is a schematic structural diagram of a communications device 2000 according to Embodiment 5 of this application.

### DESCRIPTION OF EMBODIMENTS

The following describes the embodiments of this application with reference to accompanying drawings.

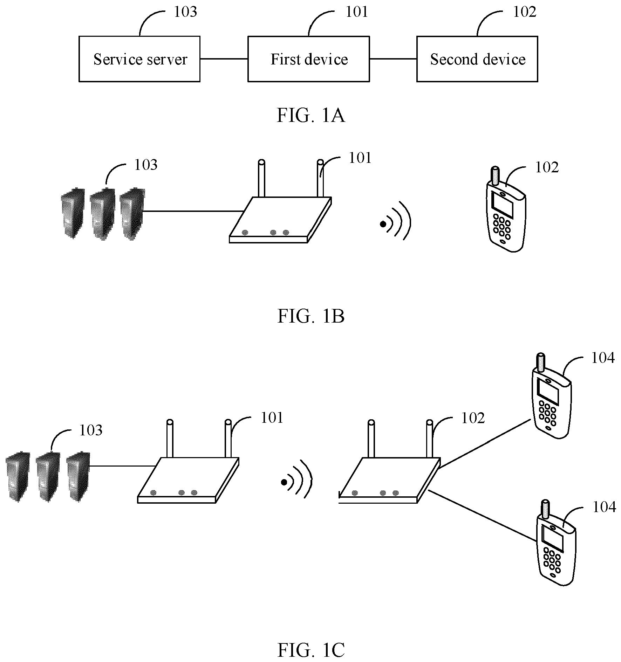

FIG. 1A to FIG. 1C are schematic diagrams of a networking structure of a communications system 100 according to an embodiment of this application. The communications system 100 includes a first device 101 and a second device 102. The first device 101 and the second device 102 may have wired communication or wireless communication, for example, wireless fidelity (Wireless Fidelity, Wi-Fi) communication, or may have both wired communication and wireless communication. The first device 101 may be a transmission device such as a router or a switch, and the second device may be a transmission device such as a router or a switch, or may be a user terminal such as a set-top box (set-top box, STB) or a VR terminal. The communications system may further include a service server 103. The service server 103 may be an IPTV server, a VR video server, or the like.

For example, the first device and the second device communicate with each other through Wi-Fi . The first device 101 may be an AP device, and may be specifically a home AP device such as an optical network terminal (Optical Network Terminal, ONT) or a customer-premises equipment (customer-premises equipment, CPE), or may be an enterprise network AP device.

As shown in FIG. 1B, the second device 102 may be a wireless user terminal, for example, a wireless set-top box (set-top box, STB) or a wireless VR terminal. A wireless user terminal that performs communication through Wi-Fi may also be referred to as a station (Station, STA). In the communications system 100 shown in FIG. 1B, a data flow sent by the service server is sent to the second device 102 through the first device 101.

As shown in FIG. 1C, the second device 102 may be another AP device. The communications system 100 shown in FIG. 1C may further include a user terminal 104, such as an STB or a VR terminal. In the communications system 100 shown in FIG. 1C, a data flow sent by the service server is sent to the user terminal 104 through the first device 101 and the second device 102.

A plurality of network adapters may be deployed in each of the first device 101 and the second device 102. When the first device 101 and the second device 102 each are a wireless device, a plurality of wireless network adapters may be deployed in each of the first device 101 and the second device 102. For example, wireless network adapters that respectively work on a 2.4G frequency band and a 5G frequency band are deployed in each of the first device 101 and the second device 102.

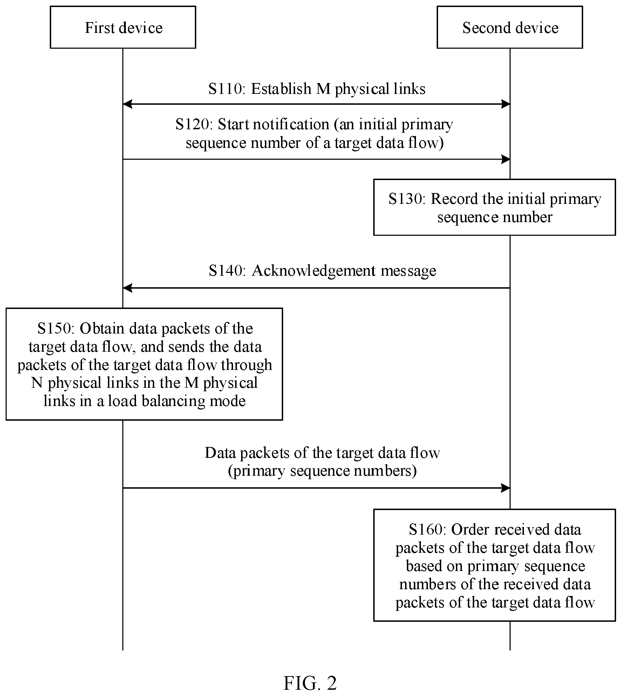

The following describes a method 100 provided in Embodiment 1 of this application with reference to FIG. 2, FIG. 3, FIG. 4A to FIG. 4C, and FIG. 5.

FIG. 2 is a schematic flowchart of a method according to Embodiment 1 of this application. The method in Embodiment 1 of this application may be applied to the communications system 100 shown in FIG. 1A to FIG. 1C.

As shown in FIG. 2, the method 100 includes the following steps.

S110: Establish M physical links between a first device (the first device 101 shown in FIG. 1) and a second device (the second device 102 shown in FIG. 1), where M is a natural number not less than 2.

M network adapters may be deployed in each of the first device and the second device, and a physical link is established between corresponding network adapters of the first device and the second device.

When the first device and the second device communicate through Ethernet, the established physical link is an Ethernet link. When the first device and the second device communicate through Wi-Fi , the established physical link is a WLAN link.

S120: The first device sends a start notification to the second device.

The first device may send the start notification when starting to receive a data packet of a target data flow. The start notification is used to notify the second device that the target data flow is to be sent to the second device through N physical links in a load balancing mode, where N is a natural number greater than 1 and not greater than M. It may be understood that when N is equal to M, the physical links used to send the target data flow in the load balancing mode is all physical links established between the first device and the second device. For example, two WLAN links are established between the first device and the second device, and may be a 5G link and a 2.4G link, and the target data flow is to be sent through the two WLAN links. When N is less than M, the physical links used to send the target data flow in the load balancing mode are some physical links established between the first device and the second device. For example, three physical links are established between the first device and the second device, and the target data flow may be sent through the three physical links in the load balancing mode, or the target data flow may be sent through two of the three physical links in the load balancing mode.

The start notification may include an initial primary sequence number of the target data flow, link identifiers of the N physical links, and an initial subsequence number corresponding to each physical link. The initial primary sequence number of the target data flow is a primary sequence number of the first data packet that belongs to the target data flow and that is sent in the load balancing mode in step S 150, and is used by the second device to order first several received data packets of the target data flow, for example, to perform out-of-order detection in an ordering process. The initial subsequence number corresponding to each physical link is a subsequence number of the first data packet that belongs to the target data flow and that is sent through the physical link in step S150, and is used by the second device to perform out-of-order detection on first several data packets of the target data flow that are received through the physical link. The start notification may further include a data transmission mode. The data transmission mode indicates that the first device is to send the data packets of the target data flow to the second device in the load balancing mode. The start notification may further include a flow identifier of the target data flow, and the flow identifier is used by the second device to determine to order data packets that are received through different physical links and that carry the flow identifier.

When determining not to send the target data flow in the load balancing mode, the first device may further send an end notification to the second device.

In this embodiment of this application, the first device sends the target data flow to the second device. Therefore, the first device may be referred to as a sending device, and the second device may be referred to as a receiving device.

The data packet in this embodiment of this application may be an internet protocol (Internet Protocol, IP) data packet.

S130 and S140: After receiving the start notification, the second device determines, based on the start notification, that the first device is to send the target data flow through the N physical links in the load balancing mode, records information carried in the start notification, for example, the initial primary sequence number, and returns an acknowledgment message.

After determining that the first device is to send the target data flow through the N physical links in the load balancing mode, the second device performs a subsequent step S160.

S150: The first device obtains the data packet of the target data flow, and sends data packets of the target data flow to the second device through the N physical links in the load balancing mode, where each data packet that is of the target data flow and that is sent in the load balancing mode carries a primary sequence number, and the sent data packets of the target data flow have consecutive primary sequence numbers.

The primary sequence numbers are used by the second device to order data packets that are received from different physical links and that belong to the target data flow. For example, the primary sequence numbers are used to perform, in the ordering process, out-of-order detection on the data packets that are received from the different physical links and that belong to the target data flow.

Each data packet that is of the target data flow and that is sent in the load balancing mode further carries a subsequence number, and data packets of the target data flow that are sent through each physical link have consecutive subsequence numbers. The subsequence number may be used by the second device to perform packet loss detection on received data packets of the target data flow.

Specifically, the first device sends different data packets of the target data flow through communications interfaces (for example, a Wi-Fi interface) corresponding to different physical links.

Before sending each data packet of the target data flow in the load balancing mode, the first device adds a primary sequence number to the data packet, and may further add a subsequence number to the data packet. An initial primary sequence number is added to the first data packet that is of the target data flow and that is sent in step S150, and primary sequence numbers that increase by 1 is sequentially added to subsequent data packets. For each physical link an initial subsequence number is added to the first data packet that is of the target data flow and that is sent through the physical link in step S150, and subsequence numbers that increase by 1 are sequentially added to other data packets of the target data flow that are subsequently sent through the physical link.

The first device specifically obtains the data packet of the target data flow from data packets to be sent to the second device. Specifically, the first device may identify the to-be-sent data packets, and identify a data packet that meets a preset condition of the target data flow as a data packet of the target data flow. In specific implementation, the first device may send data packets of a plurality of services to the second device, and may transmit data packets of only some services in the load balancing mode, for example, transmit, in the load balancing mode, a data flow of a video service having a high bit rate such as 4K IPTV, 8K IPTV, or VR. Correspondingly, the first device may identify, as a data packet of the target data flow, the data packet that meets the preset condition and that is to be sent to the second device, and perform load balancing. For example, a data packet belonging to one or more preset services is identified as a data packet of the target data flow. For another example, a data packet whose 5-tuple is a preset 5-tuple is identified as a data packet of the target data flow.

In an implementation, load balancing may be performed on data flows that are sent by one or more service servers and that are used as a whole. Specifically, a data packet whose source IP address belongs to a source IP address list may be identified as a data packet of the target data flow. In other words, an entirety of all data packets whose source IP addresses belong to the source IP address list is used as the target data flow. The source IP address list includes one or more IP addresses, for example, includes an IP address of a service server that provides video services with various bit rates. In specific implementation, the first device may compare a source IP address of the to-be-sent data packet and an IP address in the source IP address list, and if the source IP address of the to-be-sent data packet is the same as any IP address in the source IP address list, the first device identifies the to-be-sent data packet as a data packet of the target data flow. The first device may add one or more obtained IPTV multicast IP addresses to the source IP address list, or may obtain an IP address corresponding to a preset domain name (for example, a domain name of a VR server) from a domain name system (Domain Name System, DNS) interaction message between a user terminal and a service server, and add the IP address to the source IP address list.

In another implementation, load balancing may be performed on a data flow sent by a specific service server. Specifically, a data packet whose source IP address is a preset source IP address (for example, an IP address of a VR server) in the to-be-sent data packet may be identified as a data packet of the target data flow. In other words, an entirety of all data packets whose source IP addresses are the preset source IP address is used as the target data flow. In specific implementation, the first device may compare a source IP address of the to-be-sent data packet and the preset source IP address, and if the source IP address of the to-be-sent data packet is the same as the preset source IP address, the first device identifies the to-be-sent data packet as a data packet of the target data flow. The first device may set an obtained IPTV multicast IP address to the preset source IP address, or may obtain an IP address corresponding to a preset domain name (for example, a domain name of a VR server) from a DNS interaction message between a user terminal and a service server, and set the IP address to the preset source IP address. In specific implementation, a plurality of source IP addresses may be preset, and data packets whose source IP addresses are different preset source IP addresses are used as different target data flows and are separately transmitted in the load balancing mode. Correspondingly, steps S120 to S160 of the method 100 are performed for each data flow.

In another implementation, load balancing may be performed on data flows that are sent to one or more user terminals (for example, a VR terminal) and that are used as a whole. Specifically, a data packet whose destination IP address belongs to a destination IP address list may be identified as a data packet of the target data flow. In other words, an entirety of all data packets whose destination IP addresses belong to the destination IP address list is used as the target data flow. The destination IP address list includes one or more IP addresses, for example, includes IP addresses of a plurality of VR terminals. Load balancing may also be performed on a data flow sent to a specific user terminal (for example, a VR terminal). Specifically, a data packet whose destination IP address is a preset destination IP address (for example, an IP address of a VR terminal) in the to-be-sent data packet may be identified as a data packet of the target data flow. In other words, an entirety of all data packets whose destination IP addresses are the preset destination IP address is used as the target data flow.

In another implementation, load balancing may be performed based on a single data flow. In other words, load balancing is performed on a data flow whose 5-tuple is a preset 5-tuple. Specifically, a data packet whose 5-tuple is the preset 5-tuple in the to-be-sent data packet may be identified as a data packet of the target data flow. In other words, an entirety of all data packets whose 5-tuples are the preset 5-tuple is used as a target data flow. In specific implementation, the first device may compare a 5-tuple of the to-be-sent data packet and the preset IP address, and if the 5-tuple of the to-be-sent data packet is the same as the preset 5-tuple, the first device identifies the to-be-sent data packet as a data packet of the target data flow. A plurality of 5-tuples may be preset, and data packets whose 5-tuples are different preset 5-tuples are used as different target data flows and are separately transmitted in the load balancing mode. Correspondingly, steps S120 to S160 of the method 100 are performed for each data flow.

In another implementation, load balancing may be simultaneously performed on video streams. Specifically, a video data packet in the to-be-sent data packet may be identified as a data packet of the target data flow. In other words, an entirety of all video data packets is used as a target data flow. The video data packet carries information indicating that video data is encapsulated, and the video data packet may be identified from the to-be-sent data packet based on the information.

In addition, the first device may alternatively transmit, in the load balancing mode as a whole, all data packets to be sent to the second device. In other words, an entirety of all the data packets to be sent by the first device to the second device is used as the target data flow.

Before sending each data packet of the target data flow in the load balancing mode, the first device may further add, to the data packet, a link identifier of a physical link used to transmit the data packet, a flow identifier of the target data flow, information used to indicate that the data packet is to be sent in the load balancing mode, and the like. A link identifier carried in each data packet is used by the second device to identify a physical link from which the data packet is received. A flow identifier carried in each data packet is used by the second device to identify data packets that are received through different physical links and that carry the flow identifier, and data packets that carry a same flow identifier are ordered. Information that is carried in each data packet and that is used to indicate that the data packet is to be sent in the load balancing mode is used by the second device to determine a sending manner of the data packet, and after determining that the sending manner of the data packet is the load balancing mode, the data packet and data packets that carry a same flow identifier are ordered.

In step S150, the first device may further adjust data traffic sent through each physical link to implement dynamic load balancing. Specifically, the data traffic may be adjusted based on a transmission rate of the target data flow in a statistics period, or may be adjusted based on load information of each physical link or may be adjusted based on a combination of a transmission rate of the target data flow in a statistics period and load information of each physical link.

The first device may specifically collect statistics about the transmission rate of the target data flow in each statistics period based on a preset statistics period length (for example, 10 ms). The transmission rate of the target data flow in each statistics period may be a receiving rate at which the first device receives the target data flow from an upstream device in the statistics period, or may be a sending rate at which the first device sends the target data flow to the second device in the statistics period. A transmission rate of the target data flow in a current statistics period may be specifically represented by a data amount (for example, a quantity of data packets or a quantity of bytes) of the target data flow that is received from an upstream device or that is sent to the second device and about which statistics are collected in the current statistics period. The first device may use one of the N physical links as a primary link, for example, use, as a primary link, a WLAN link established through a 5G network adapter. When the transmission rate is less than or equal to a preset rate threshold, the data packet of the target data flow is to be sent only through the primary link; or when the transmission rate is higher than a rate threshold, some data packets of the target data flow are offloaded onto another physical link for transmission. Further, when the transmission rate is higher than the rate threshold, data traffic sent through each physical link may be further adjusted based on a difference between the transmission rate (which is represented as S subsequently) and the rate threshold (which is represented as S' subsequently). For example, a product of a received data amount of the target data flow and R is used as a data amount allocated to another physical link, where R = (S - S')/S. The rate threshold is not greater than maximum bandwidth of the primary link, for example, may be 70% of the maximum bandwidth of the primary link.

The first device may specifically detect the load information of each physical link based on a preset detection period length (for example, 10 ms). For any physical link used to send the target data flow, the load information of the physical link may be queue utilization, detected at a detection moment, of a data sending queue that is of the physical link and that is corresponding to the target data flow, or may be predicted queue utilization that is of the data sending queue and that is obtained after preset duration (for example, the detection period length). Specifically, the queue utilization D2 that is of the data sending queue and that is obtained after the preset duration t may be calculated based on the queue utilization D1 that is of the data sending queue and that is detected at the detection moment, where D2 = D1 + k x t. Herein, k is used to represent a change trend of the queue utilization of the physical link and may be calculated based on D1 and queue utilization that is of the data sending queue and that is obtained before the preset duration t. For a physical link with relatively light load, for example, a physical link whose predicted queue utilization is relatively low, a data amount that is of the target data flow and that is sent through the physical link canbe increased. Correspondingly, for a physical link with relatively heavy load, for example, a physical link whose predicted queue utilization is relatively high, a data amount that is of the target data flow and that is sent through the physical link can be reduced. For example, different data packets of the target data flow are sent through a WLAN link 1 and a WLAN link 2, and predicted queue utilization of the two WLAN links are 30% and 60% respectively. In this case, a data amount that is of the target data flow and that is allocated to the WLAN link 1 can be increased, and a data amount that is of the target data flow and that is allocated to the WLAN link 2 can be reduced. In addition, one of the N physical links may be used as a primary link. For example, a WLAN link established through a 5G network adapter is used as a primary link. When predicted queue utilization of the primary link is less than or equal to a preset utilization threshold, only the primary link is used to send the data packets of the target data flow; or when predicted queue utilization of the primary link is greater than a utilization threshold, some data packets of the target data flow are offloaded onto another physical link for transmission. The utilization threshold is greater than 50% and less than 100%, for example, may be 70%.

Step S160: The second device receives data packets of the target data flow through the N physical links, and orders the received data packets of the target data flow based on primary sequence numbers of the received data packets of the target data flow.

In step S160, the second device may first identify a data packet that belongs to the target data flow, and then perform ordering based on a primary sequence number of each identified data packet of the target data flow. If the data packet of the target data flow carries a flow identifier of the target data flow, the second device may further first identify, from the received data packet based on the flow identifier, a data packet that belongs to the target data flow. If there is only one target data flow in a same time period, the data packet of the target data flow may not carry the flow identifier. Correspondingly, the second device may identify, as a data packet that belongs to the target data flow, a data packet that carries a primary sequence number.

In the ordering process, the second device may perform out-of-order detection on the target data flow based on primary sequence numbers of received data packets, and order the received data packets of the target data flow based on an out-of-order detection result. To improve detection accuracy, out-of-order detection may be further performed with reference to a packet loss status of the target data flow. When detecting the packet loss status, the second device may detect the packet loss status of the target data flow based on a subsequence number of the received data packet of the target data flow. Further, if it is determined that a currently received data packet is out of order, the data packet is added to a reorder buffer; or if it is determined that a currently received data packet is not out of order, the data packet is forwarded or the data packet is received into an operating system protocol stack of the second device. It may be understood that if the second device is not a user terminal, and needs to forward the target data flow to a downstream device (for example, a user terminal, or another device between the second device and the user terminal), the second device forwards the data packet. For example, the second device is an AP, and forwards the data packet to a user terminal connected to the second device. If the second device is a user terminal, the data packet is received into an operating system protocol stack of the second device.

If a later sent data packet of the target data flow arrives at the second device before an earlier sent data packet of the target data flow, the later sent data packet may be usually added to the reorder buffer, to wait for the earlier sent data packet. For a received data packet 1 and a received data packet 2 that are of the target data flow and whose primary sequence numbers are num1 and num2 respectively, num1 is less than num2, and num1 and num2 are inconsecutive. If a data packet whose primary sequence number is greater than num1 and less than num2 has not been received, it may be considered that a buffer hole is formed between the data packet 1 and the data packet 2. The buffer hole may be represented as a primary sequence number interval (num1, num2). The data packet whose primary sequence number is greater than num1 and less than num2 may be referred to as a data packet that falls into the buffer hole. It may be understood that if there is no buffer hole currently, the reorder buffer is empty. For example, data packets whose primary sequence numbers are 1, 2, 3, 6, 5, and 4 are sequentially received, a primary sequence number interval (3, 6) is a buffer hole, and the data packets whose primary sequence numbers are 4 and 5 are data packets that fall into the buffer hole. After the data packets whose primary sequence numbers are 5 and 4 are received, the buffer hole is filled. In this case, all the data packets whose primary sequence numbers are 1 to 6 are forwarded or sent to an operation protocol stack. In this case, the reorder buffer is empty.

In a process of performing out-of-order detection on the target data flow, for a currently received data packet (subsequently referred to as a current data packet), whether a reorder buffer corresponding to the target data flow is empty may be further determined. If a reorder buffer corresponding to the target data flow is not empty when the current data packet is received, there are usually one or more buffer holes in the recorder buffer, and it indicates that the current data packet is a data packet that falls into a buffer hole of the reorder buffer, or may be a data packet after a last buffer hole of the reorder buffer. In this case, the current data packet may be directly added to the reorder buffer. For example, data packets whose primary sequence numbers are 1, 2, 3, 6, 5, and 7 are sequentially received, a primary sequence number interval (3, 6) is a buffer hole, the data packets whose primary sequence numbers are 4 and 5 are data packets that fall into the buffer hole, and the data packet whose primary sequence number is 7 is a data packet after the buffer hole. Correspondingly, when the data packet whose primary sequence number is 5 is received, the reorder buffer is not empty, and the data packet whose primary sequence number is 5 is added to the reorder buffer to fill the buffer hole; and when the data packet whose primary sequence number is 7 is received, the reorder buffer is not empty, the data packet whose primary sequence number is 7 is added to the reorder buffer to wait to fill the buffer hole. It may be understood that, if the reorder buffer corresponding to the target data flow is not empty when the current data packet is received, it may also be considered that the current data packet is out of order.

If a reorder buffer corresponding to the target data flow is empty when the current data packet is received, whether the current data packet is out of order may be determined based on a primary sequence number of the current data packet and a primary sequence number of a data packet (subsequently referred to as a reference data packet) that has a maximum primary sequence number in the target data flow and that is received before the current data packet is received. Specifically, when it is determined that there is a data packet that belongs to the target data flow, that is sent through a physical link different from that of the current data packet, and whose primary sequence number is greater than the primary sequence number of the reference data packet and less than the primary sequence number of the current data packet, it may be determined that the current data packet is out of order. It may be understood that, if the receiving device is not a user terminal, and needs to forward a data packet of the target data flow to a downstream device, the reference data packet is the last data packet that is of the target data flow and that is forwarded by the receiving device before the receiving device receives the current data packet. If the receiving device is a user terminal, the reference data packet is the last data packet that is received by the receiving device into the operating system protocol stack before the receiving device receives the current data packet.

When it is determined that the current data packet and the reference data packet have inconsecutive primary sequence numbers, it may be directly determined that the current data packet is out of order, and when it is determined that the current data packet and the reference data packet have consecutive primary sequence numbers, it is determined that the current data packet is not out of order. This implementation is relatively simple and less computing resources are consumed.

To improve accuracy of out-of-order detection, the second device may first determine whether the current data packet and the reference data packet are from a same physical link and perform out-of-order detection in a corresponding manner.

If the current data packet and the reference data packet are from different physical links, when it is determined that the primary sequence number of the current data packet and the primary sequence number of the reference data packet are inconsecutive, it may be determined that the current data packet is out of order. The data packets of the target data flow are transmitted through different physical links, and a data packet that is earlier sent through a physical link may arrive after a data packet that is later sent through another physical link. Consequently, the data packets are out of order. According to this implementation, out-of-order detection is performed in consideration of whether primary sequence numbers of data packets that are successively received from different physical links are consecutive, so that the out-of-order detection result is more accurate.

If the current data packet and the reference data packet are from a same physical link, a packet loss status on the physical link may be further considered, and out-of-order detection is performed with reference to the primary sequence numbers of the current data packet and the reference data packet and the packet loss status on the physical link. Specifically, when it is determined that a first quantity of sent packets is greater than a first quantity of lost packets, it may be determined that the current data packet is out of order. The first quantity of sent packets is a quantity of data packets that are sent by the first device, that belong to the target data flow, and whose primary sequence numbers are greater than the primary sequence number of the reference data packet and less than the primary sequence number of the current data packet. The first quantity of lost packets is a quantity of data packets that are lost on the physical link and that are in the data packets that are sent by the first device, that belong to the target data flow, and whose primary sequence numbers are greater than the primary sequence number of the reference data packet and less than the primary sequence number of the current data packet.

When the primary sequence numbers of the current data packet and the reference data packet that are received by the second device are inconsecutive, a disorder may occur, a packet loss may occur, or both a packet loss and a disorder may occur. Out-of-order detection is performed with reference to a packet loss status in the foregoing implementation, so that an out-of-order detection result is more accurate.

In specific implementation, each data packet that is of the target data flow and that is sent by the first device in the load balancing mode may further carry a subsequence number, and data packets of the target data flow that are sent through each physical link have consecutive subsequence numbers. Correspondingly, a specific implementation of determining that the quantity of sent packets is greater than the quantity of lost packets may be: determining that a difference between the primary sequence number of the current data packet and the primary sequence number of the reference data packet is greater than a difference between a subsequence number of the current data packet and a subsequence number of the reference data packet.

It may be understood that there are two cases in which the difference between the primary sequence numbers of the two data packets is greater than the difference between the subsequence numbers of the two data packets. One case is that the two data packets have inconsecutive primary sequence numbers and inconsecutive subsequence numbers, and the difference between the primary sequence numbers of the two data packets is greater than the difference between the subsequence numbers. In this case, a quantity of lost packets is not 0. That is, a data packet that belongs to the target data flow and that is between the two data packets is lost on the physical link, and the quantity of lost packets is obtained by subtracting one from the difference between the subsequence numbers. Another case is that the two data packets have inconsecutive primary sequence numbers and consecutive subsequence numbers. In this case, a quantity of lost packets is 0. That is, a data packet that belongs to the target data flow and that is between the two data packets is not lost on the physical link.

A disorder does not occur between data packets transmitted through a single physical link. Therefore, if the two data packets are transmitted through a same physical link and have inconsecutive subsequence numbers, it may be determined, based on this, that a packet loss occurs between the two data packets, and a disorder does not necessarily occur. Therefore, a combination of the subsequence number and the primary sequence number may be used for more accurate out-of-order detection.

With reference to an example, the following describes in detail a process of performing out-of-order detection by using the combination of the primary sequence number and the subsequence number.

In step S160, for the first received data packet of the target data flow, if a primary sequence number of the data packet is an initial primary sequence number of the target data flow, it is determined that the data packet is not out of order; or if a primary sequence number of the data packet is not an initial primary sequence number of the target data flow and a subsequence number of the data packet is an initial subsequence number of a physical link used to transmit the data packet, it indicates that a data packet (for example, a data packet whose primary sequence number is the initial primary sequence number) whose primary sequence number is less than the primary sequence number of the data packet is transmitted through another physical link and therefore, it can be determined that the data packet is out of order; or if a primary sequence number of the data packet is not an initial primary sequence number of the target data flow, a subsequence number of the data packet is not an initial subsequence number of the physical link used to transmit the data packet, and a difference between the primary sequence number and the initial primary sequence number of the data packet is the same as a difference between the subsequence number and the initial subsequence number of the data packet, it indicates that a data packet whose primary sequence number is less than the primary sequence number of the data packet is also sent through the physical link, and because a disorder does not occur on a same physical link, it indicates that a data packet whose primary sequence number is less than the primary sequence number of the data packet is lost, and therefore, it is determined that the data packet is not out of order; or if the primary sequence number of the data packet is not an initial primary sequence number of the target data flow, the subsequence number of the data packet is not an initial subsequence number of the physical link used to transmit the data packet, and a difference between the primary sequence number and the initial primary sequence number of the data packet is greater than a difference between the subsequence number and the initial subsequence number of the data packet, it indicates that some of data packets whose primary sequence numbers are smaller than the primary sequence number of the data packet are lost, and some of the data packets are sent through another physical link, and therefore, it is determined that the data packet is out of order.

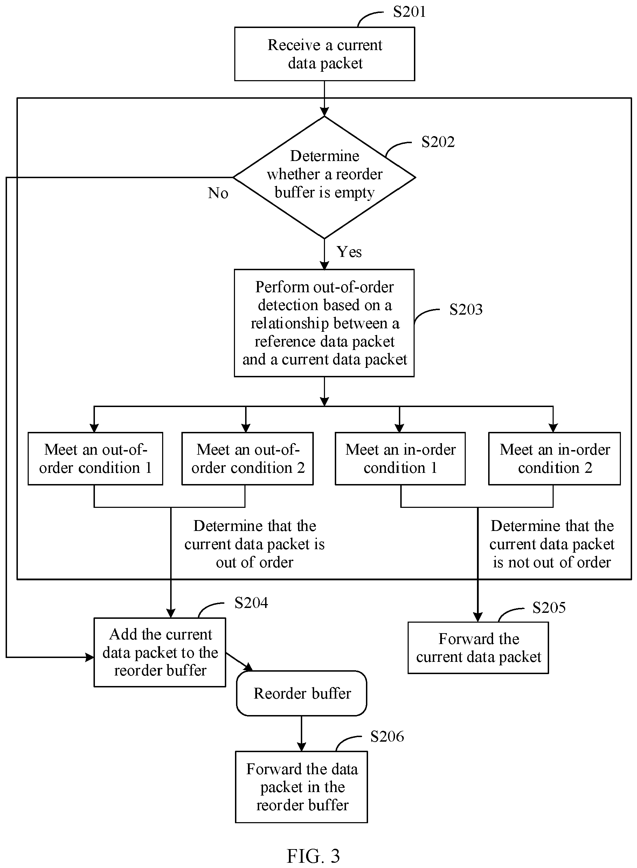

For each received subsequent data packet (also referred to as a current data packet subsequently) of the data flow, the following describes a specific implementation procedure of performing out-of-order detection on the current data packet in step S160 with reference to FIG. 3.

In the following specific implementation procedure, an identifier of a physical link used to transmit a data packet (also referred to as a reference data packet subsequently) that has a maximum primary sequence number in the target data flow and that is received before the current data packet is received is PHY ID 1, a primary sequence number of the reference data packet is X1, and a subsequence number of the reference data packet is Y1. An identifier of a physical link used to transmit the current data packet is PHY ID 2, a primary sequence number of the current data packet is X2, and a subsequence number of the current data packet is Y2.

Step S201: When receiving the current packet, obtain the primary sequence number X2 of the current packet, the subsequence number Y2 of the current packet, and the physical link identifier PHY ID 2 of the current packet.

S202: Determine whether the reorder buffer corresponding to the target data flow is empty, and perform step S204 if the reorder buffer corresponding to the target data flow is not empty; or perform S203 if the reorder buffer corresponding to the target data flow is empty.

If the reorder buffer is not empty, there are usually one or more buffer holes in the recorder buffer, and it indicates that the current data packet is a data packet that falls into a buffer hole of the reorder buffer, or may be a data packet after a last buffer hole of the reorder buffer. In this case, step S204 may be performed to directly add the current data packet to the reorder buffer.

S203: Perform out-of-order detection based on a relationship between the primary sequence number of the reference data packet and the primary sequence number of the current data packet.

In step S203, whether the current data packet meets an out-of-order condition 1 or 2 may be detected. If the current data packet meets the out-of-order condition 1 or the out-of-order condition 2, it is determined that the current data packet is out of order, and step S204 is performed; or if the current data packet does not meet the out-of-order condition 1 or the out-of-order condition 2, it is determined that the current data packet is not out-of-order, and step S205 is performed. In this implementation, specific determining of in-order conditions 1 and 2 is not performed.

In step S203, whether the current data packet meets the in-order condition 1 or 2 may be detected. If the current data packet meets the in-order condition 1 or the in-order condition 2, it is determined that the current data packet is not out of order, and step S205 is performed; or if the current data packet does not meet the in-order condition 1 or the in-order condition 2, it is determined that the current data packet is out-of-order, and step S204 is performed. In this implementation, specific determining of the out-of-order conditions 1 and 2 is not performed.

In step S203, a condition that is in the in-order conditions 1 and 2 and the out-of-order conditions 1 and 2 and that is met by the current data packet may also be detected. If the current data packet meets the out-of-order condition 1 or the out-of-order condition 2, it is determined that the current data packet is out of order, and step S204 is performed; or if the current data packet meets the in-order condition 1 or the in-order condition 2, it is determined that the current data packet is not out-of-order, and step S205 is performed.

A specific implementation of determining that the current data packet meets the out-of-order condition 1 is: PHY ID 2 = PHY ID 1, and X2 - X1 > Y2 - Y1. PHY ID 2 = PHY ID 1 indicates that the current data packet and the reference data packet are from a same physical link, and X2 - X1 > Y2 - Y1 indicates that a difference between the primary sequence number of the current data packet and the primary sequence number of the reference data packet is greater than a difference between the subsequence numbers.

In one case, X2 = X1 + N, Y2 = Y1 + 1, and N > 1. X2 = X1 + N indicates that the current data packet and the reference data packet have inconsecutive primary sequence numbers, and Y2 = Y1 + 1 indicates that the current data packet and the reference data packet have consecutive subsequence numbers. The current data packet and the reference data packet are successively received from a same physical link and have consecutive subsequence numbers. It indicates that no packet is lost on the physical link. N-1 data packets between the current data packet and the reference data packet have not been received, and the N-1 data packets are very likely to be transmitted through another physical link. Therefore, if the out-of-order condition 1 is met, it can be considered that a disorder occurs and no packet is lost.

In another case, X2 = X1 + N, Y2 = Y1 + M, N > M, M > 1, and N > 1. X2 = X1 + N indicates that the current data packet and the reference data packet have inconsecutive primary sequence numbers, and Y2 = Y1 + M indicates that the current data packet and the reference data packet have inconsecutive subsequence numbers, N > M indicates that N-M data packets between the current data packet and the reference data packet have not been received. Because a disorder usually does not occur on a same physical link, it may be further determined that M-1 data packets in the N-M data packets that have not been received are lost.

In specific implementation, the out-of-order condition 1 may be used as one out-of-order condition, to perform out-of-order detection, or the out-of-order condition 1 may be split into two out-of-order conditions respectively corresponding to the foregoing two cases, to perform out-of-order detection. In other words, the out-of-order condition 1 includes two out-of-order conditions. It is considered that a disorder occurs provided that one of the two out-of-order conditions is met.

It is determined that a specific implementation of determining that the out-of-order condition 2 is met is: PHY ID 2! = PHY ID 1, and X2 - X1 > 1. PHY ID 2! = PHY ID 1 indicates that the current data packet and the reference data packet are from different physical links, and X2-X1 > 1 indicates that the current data packet and the reference data packet have inconsecutive primary sequence numbers.

A specific implementation of determining that the current data packet meets the in-order condition 1 is: PHY ID 2 = PHY ID 1, and X2 - X1 > Y2 - Y1. PHY ID 2 = PHY ID 1 indicates that the current data packet and the reference data packet are from a same physical link.

In one case, X2 = X1 + 1, and Y2 = Y1 + 1. X2 = X1 + 1 indicates that the current data packet and the reference data packet have consecutive primary sequence numbers, and Y2 = Y1 + 1 indicates that the current data packet and the reference data packet have consecutive subsequence numbers.

In another case, X2 = X1 + N, Y2 = Y1 + N, and N > 1. X2 = X1 + N indicates that the current data packet and the reference data packet have inconsecutive primary sequence numbers, and Y2 = Y1 + N indicates that the current data packet and the reference data packet have inconsecutive subsequence numbers, and a difference between primary sequence numbers is the same a difference between subsequence numbers. The current data packet and the reference data packet have both inconsecutive primary sequence numbers and inconsecutive subsequence numbers. It indicates that a packet is lost when a data packet is received from the physical link. The difference between the primary sequence numbers is the same the difference between the subsequence numbers, and both are N-1. Because a disorder usually does not occur on a same physical link, it indicates that N-1 data packets are all lost packets on the physical link.

In specific implementation, the in-order condition 1 may be used as one in-order condition, to perform out-of-order detection, or the in-order condition 1 may be split into two in-order conditions respectively corresponding to the foregoing two cases, to perform out-of-order detection. In other words, the in-order condition 1 includes two in-order conditions. It is considered that no disorder occurs provided that one of the two in-order conditions is met.

It is determined that a specific implementation of determining that the in-order condition 2 is met is: PHY ID 2! = PHY ID 1, and X2 - X1 = 1. PHY ID 2! = PHY ID 1 indicates that the current data packet and the reference data packet are from different physical links, and X2 - X1 = 1 indicates that the current data packet and the reference data packet have consecutive primary sequence numbers.

S204: Add the current data packet to the reorder buffer.

It should be noted that if step S204 is performed after step S202, the current data packet may be a data packet that falls into a buffer hole of the reorder buffer, or may be a data packet after a last buffer hole of the reorder buffer. If the current data packet is a data packet that falls into the buffer hole of the reorder buffer, the current data packet is used to fill the buffer hole in step S204. If the current data packet is a data packet after the last buffer hole of the reorder buffer, a new buffer hole may be formed for the current data packet in step S204. For example, data packets whose primary sequence numbers are 1, 2, 3, 6, and 8 are sequentially received. When a data packet whose primary sequence number is 8 is received, the reorder buffer includes a buffer hole, a primary sequence number interval (3, 6), and the data packet whose primary sequence number is 8 is added to the reorder buffer to form a new buffer hole (6, 8).

If step S204 is performed after step S203, because the reorder buffer is empty before step S204 is performed, a buffer hole (Lnum, Rnum) is formed for the current data packet in step S204, a left boundary Lnum of the buffer hole is the primary sequence number of the reference packet, and a right boundary Rnum is a primary sequence number of the current data packet. For example, data packets whose primary sequence numbers are 1, 2, 3, and 6 are sequentially received, or data packets whose primary sequence numbers are 1, 3, 2, and 6 are sequentially received. When the data packet whose primary sequence number is 6 is received, the reorder buffer is empty, the data packet whose primary sequence number is 6 is added to the reorder buffer to form a buffer hole (3, 6).

When the reorder buffer includes one buffer hole, if the buffer hole is filled with a data packet after step S204 is performed, or a timer of the buffer hole expires, step S206 is performed to forward the data packet in the reorder buffer or to receive the data packet into the reorder buffer to the operating system protocol stack.

When the reorder buffer includes a plurality of buffer holes, if the first buffer hole is filled with a data packet after step S204 is performed, or a timer of the first buffer hole expires, step S206 is performed to forward the data packet located before the second buffer hole in the reorder buffer or to receive, into the operating system protocol stack, the data packet located before the second buffer hole in the reorder buffer.

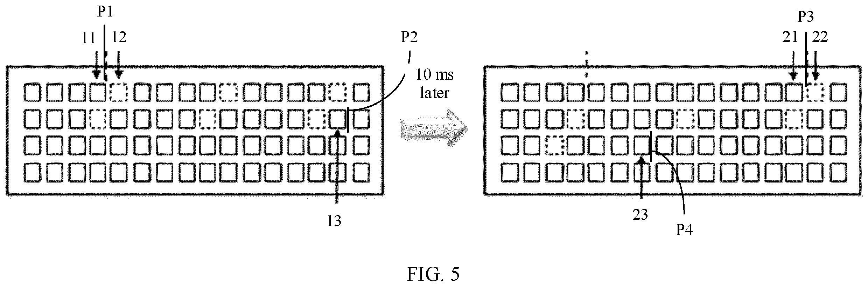

As shown in a left figure in FIG. 5, after the data packet 13 is added to the reorder buffer, the reorder buffer includes data packets between locations P1 and P2. Dashed boxes between P1 and P2 show missing data packets in the buffer holes, for example, a data packet 12, and the reorder buffer includes a total of six buffer holes. The last data packet that is forwarded currently or the last data packet that is received into the operating system protocol stack is the data packet 11. A data packet after P2 has not been received.

As shown in a right figure in FIG. 5, after 10 ms, both the first buffer hole and the second buffer hole are filled, and data packets (namely, a data packet 21 and a data packet before the data packet 21) before the third buffer hole are both forwarded or received into the operating system protocol stack. In this case, the reorder buffer includes data packets between locations P3 and P4, a data packet 22 is a missing data packet in the first buffer hole, and a data packet 23 is a data packet with a largest sequence number in the reorder buffer. A data packet after P4 has not been received.

In specific implementation, in order to further improve forwarding efficiency, a packet loss status may be considered in a process of forwarding a data packet in the reorder buffer.

When the reorder buffer includes one buffer hole, if a data packet before the buffer hole and a data packet after the buffer hole are from a same physical link, a difference between subsequence numbers of the two data packets may be subtracted by 1 to determine the quantity Ln of lost data packets in the buffer hole. Correspondingly, after the buffer hole are filled with a missing packet until only Ln data packets are missed, step S206 is performed to forward the data packet in the reorder buffer or receive the data packets in the reorder buffer into the operating system protocol stack.

When the reorder buffer includes a plurality of buffer holes, for the first buffer hole in the reorder buffer, if a data packet before the buffer hole and a data packet after the buffer hole are from a same physical link, a difference between subsequence numbers of the two data packets may be subtracted by 1 to determine the quantity Ln of lost data packets in the buffer hole. Correspondingly, after missing data packets in the buffer hole are filled with a missing packet until only Ln data packets are missed, step S206 is performed to forward a data packet located before the second buffer hole in the reorder buffer or receive, into the operating system protocol stack, a data packet located before the second buffer hole in the reorder buffer.

According to this implementation, in a case of a packet loss, there is no need to wait for the timer of the buffer hole to expire, and efficiency is relatively high.

Step S205: Forward the current data packet or receive the current data packet into the operating system protocol stack.

After step S205 is performed, a data packet received after the current data packet is used as a new current data packet, and step S201 and subsequent steps are performed again.

According to this embodiment of this application, information such as a primary sequence number, a subsequence number, and a flow identifier of a target data flow to which the data packet belongs may be carried in an extension header between a layer-2 (namely, a data link layer) header and a layer-3 header of the data packet of the target data flow. Subsequently, the extension header is referred to as a shim layer header, and a protocol corresponding to the shim layer header is referred to as a shim layer protocol. In this embodiment of this application, the data packet of the target data flow is usually a network layer data packet, for example, an IP data packet. Correspondingly, a network layer header of the data packet is an IP packet header of the data packet, and a data link layer header of the data packet is an encapsulated media access control (Media Access Control, MAC) header outside the data packet.

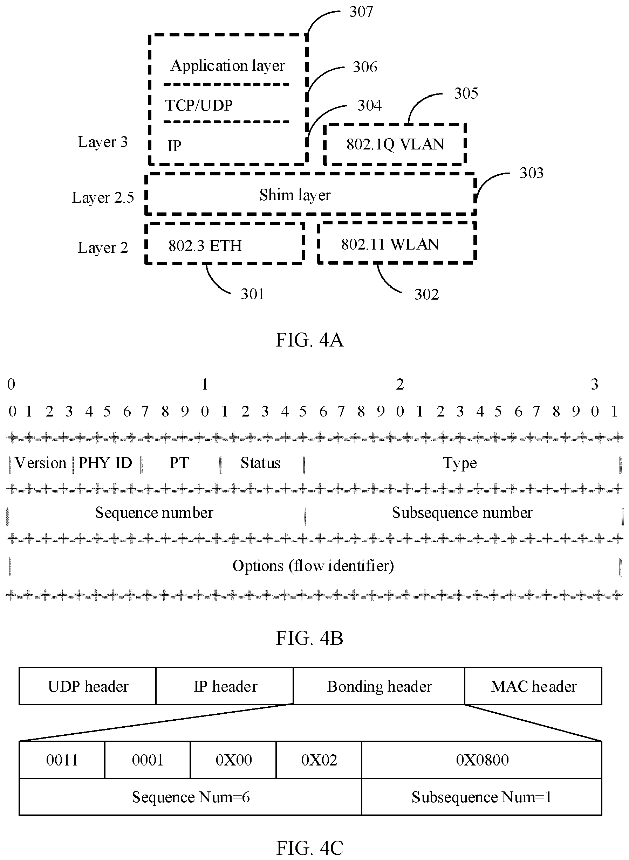

FIG. 4A is a schematic diagram of a network hierarchy in which a shim layer is added. As shown in FIG. 4A, a shim layer is extended between Layer 2 and Layer 3, and the extended shim layer is located between Layer 2 and Layer 3, and may also be referred to as Layer 2.5. Each data packet that is of the target data flow and that is sent in the load balancing mode carries a shim layer header. For example, the data packet of the target data flow is an IP data packet, and the first device encapsulates a shim layer header of the IP data packet, and adds information such as a primary sequence number to the shim layer header of the IP data packet. Correspondingly, the second device removes the shim layer header of the IP data packet before forwarding the IP data packet or receiving the IP data packet into the operating system protocol stack.

As shown in FIG. 4A, 301 is an 802.3 Ethernet (Ethernet, ETH) protocol, 302 is an 802.11 WLAN protocol, andbothbelong to physical layer protocols and Layer 2 protocols; 304 is IP, 305 is an 802.1Q VLAN protocol, and both belong to Layer 3 protocols; 306 is a transmission control protocol (Transmission Control Protocol, TCP)/user datagram protocol (User Datagram Protocol, UDP), 307 is an application layer (Application Layer) protocol, and both are protocols above Layer 3. 303 is an extended shim layer (Shim Layer) protocol in this embodiment of this application.

A data structure of the extended shim layer header is shown in FIG. 4B.

Table 1 defines fields in the shim layer header.

**Table 1**

| Field | Function |
|---|---|
| Version | Protocol version number |
| PHY ID | Physical link identifier |
| PT | This parameter is used to indicate whether a packet is a control |
| | message or a data packet sent in a load balancing mode |
| Status | Flow Status |
| Type | This parameter indicates an upper-layer protocol type. For example, 0X0800 indicates that an upper-layer protocol is IP. |
| Sequence number | Primary sequence number |
| Subsequence number | Subsequence number |
| Options (Flow ID) | An option, considered as a flow ID by default, is used to identify a target data flow. |

In this embodiment of this application, there may be two types of packets to which a shim layer header is added. One type is a control message, and the other type is a data packet sent in a load balancing mode. The control message is used to control a process of sending the target data flow in the load balancing mode, and may be specifically the foregoing start notification, end notification, acknowledgment message, or the like. A shim layer header in the control message is used to carry related information of the target data flow. A shim layer header of the start notification includes information such as an initial primary sequence number, an initial subsequence number, and a flow identifier. A shim layer header of the end notification and a shim layer header of the acknowledgment message includes information such as a flow identifier. When a value of the PT field indicates that a packet in which the PT field is located is a control message, the values of the sequence number field and the subsequence number field are respectively an initial primary sequence number and an initial subsequence number. When a value of the PT field indicates that a packet in which the PT field is located is a data packet sent in the load balancing mode, the values of the sequence number field and the subsequence number field are respectively a primary sequence number and a subsequence number of the data packet.

The PT field may be used to specifically distinguish between packet types. A marker bit of the PT (Packet Type) flag bit is defined in Table 2.

**Table 2**

| Bit | Function |
|---|---|
| Bit 0 | 0: There is no options field. 1: The options field is supported. |
| Bits 1 to 3 | 0x0: Data packets of the target data flow that are sent in a multilink mode |
| | 0x1: Start notification |
| | 0x2: End notification |
| | 0x3: Acknowledgment message |

A value of the bit 0 of the PT field indicates whether a packet in which the PT field is located includes the options field. 0 indicates that the data packet includes the options field, and 1 indicates that the data packet does not include the options field. Values of bits 1 to 3 of the PT field is used to indicate a type of the packet in which the PT field is located. Herein, 0x0 indicates that the packet in which the PT field is located is a data packet that is of the target data flow and that is sent in the multilink mode (for example, in the load balancing mode or a multi-sending and selective receiving mode), 0x1 to 0x3 indicate that the packet in which the PT field is located is a control message, 0x1 indicates that the packet in which the PT field is located is a start notification, 0x2 indicates that the packet in which the PT field is located is an end notification, and 0x3 indicates that the packet in which the PT field is located is an acknowledgment message. It should be noted that the control message may be signaling, or may be implemented by using a data packet that is not sent in the multilink mode, provided that the data packet carries a field value used to indicate that the data packet is used as the control message.

A marker bit of the flow status field-status is defined in Table 3.

**Table 3**

| Bit | Function |
|---|---|
| Bit 0 | 0: Single-link status 1: Multilink status |
| Bits 1 to 3 | 0x1: Multi-sending and selective receiving mode |
| | 0x2: Load balancing mode |

A value of the bit 0 of the status field indicates whether the data flow is currently sent through a single physical link or a plurality of physical links, and values of the bits 1 to 3 of the status field are used to indicate whether a data transmission mode used for a data flow is a multi-sending and selective receiving mode or a load balancing mode. The value 0x1 indicates multi-sending and selective receiving, and the value 0x2 indicates load balancing. The multi-sending and selective receiving means that a sending device sends a same data packet through different physical links between the sending device and a receiving device, and for received data packets with a same sequence number, the receiving device combines, into a data flow, a data packet that is first received and that carries the sequence number.

An example of a shim layer header of one data packet that is of the target data flow and that is sent in step S150 is shown in FIG. 4C. PHY ID = 1 indicates that the data packet is sent through the physical link 1. If a flow identifier is 0x02, it indicates that a target data flow to which the data packet belongs is transmitted in the load balancing mode. Assuming that both the initial primary sequence number and the initial subsequence number are 1. For the primary sequence number in FIG. 4C, sequence number = 6 indicates that the data packet is the sixth data packet of the target data flow, and for the subsequence number, Subsequence Number = 1 indicates that the data packet is the first data packet sent through a physical link whose PHY ID is 1. This indicates that the data packets whose primary sequence numbers are 1 to 5 are transmitted through other physical links.

According to the method 100 provided in Embodiment 1 of this application, the data packets of the target data flow are distributed to different physical links for sending, instead of being sent through one physical link, so that bandwidth provided by different physical links can be effectively used, and a packet loss rate is reduced.

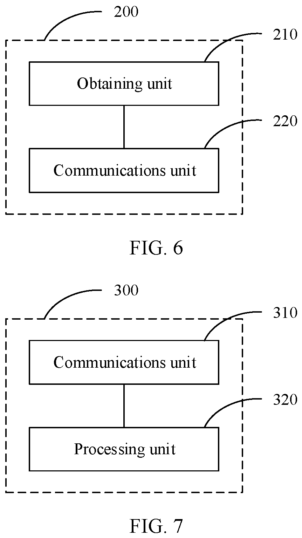

According to Embodiment 1 of this application, Embodiment 2 of this application provides a communications device 200. As shown in FIG. 6, the communications device 200 includes an obtaining unit 210 and a communications unit 220.

The obtaining unit 210 is configured to obtain data packets of a target data flow. The obtaining unit 210 is specifically configured to obtain the data packets of the target data flow from to-be-sent data packets, for example, identify, as the data packets of the target data flow, data packets that are to be sent to the second device and that meet a preset condition (for example, data packets that belong to one or more preset services). For specific operations that can be performed by the obtaining unit 210, refer to a detailed processing process of a corresponding operation performed on a first device side in the foregoing embodiment shown in FIG. 2 to FIG. 5, for example, a detailed processing process in step S150. Details are not described herein again.

The communications unit 220 is configured to communicate with another device, including sending the data packets of the target data flow to a receiving device through a plurality of physical links between the communications device and the receiving device in a load balancing mode, where each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow. The communications unit 220 may be further configured to: receive and send a control message (for example, send a start notification), and establish a physical link to the second device, and the like. In a process of sending the data packets of the target data flow, the communications unit 220 may be further configured to may be further configured to: dynamically adjust a data amount that is of the target data flow and that is sent through each physical link and add load balancing related information such as a primary sequence number and a subsequence number to the to-be-sent data packet of the target data flow. For specific operations that can be performed by the communications unit 220, refer to a detailed processing process of a corresponding operation performed on the first device side in the foregoing embodiment shown in FIG. 2 to FIG. 5, for example, detailed processing processes in step S110, S120, S140, and S150. Details are not described herein again.

According to the transmission device 200 provided in Embodiment 2 of this application, the data packets of the target data flow are distributed to different physical links for sending, instead of being sent through one physical link, so that bandwidth provided by different physical links can be effectively used, and a packet loss rate is reduced.

According to Embodiment 1 of this application, Embodiment 3 of this application provides a communications device 300. As shown in FIG. 7, the communications device 300 includes a communications unit 310 and a processing unit 320.

The communications unit 310 is configured to communicate with another device, including receiving, through a plurality of physical links between the communications device and a sending device, data packets of a target data flow that are sent by the sending device, where each data packet of the target data flow carries a primary sequence number, and the data packets of the target data flow that are sent by the sending device have consecutive primary sequence numbers. The communications unit 310 may be further configured to: receive and send a control message (for example, receive a start notification), establish a physical link to a first device, and the like. For specific operations that can be performed by the communications unit 310, refer to a detailed processing process of a corresponding operation performed on a second device side in the foregoing embodiment shown in FIG. 2 to FIG. 5, for example, detailed processing processes in step S110, S120, S140, S201, S205, and S206. Details are not described herein again.

The processing unit 320 is configured to order, based on primary sequence numbers of data packets of the target data flow that are received by the communications unit 310, the received data packets of the target data flow. The processing unit 320 may be specifically configured to form the target data flow based on a primary sequence number and a subsequence number of a received data packet of the target data flow, for example, perform out-of-order detection on the target data flow, add a data packet that is out of order to a reorder buffer, and forward, through the communications unit 310, a data packet that is not out of order, or receive the data packet into an operating system protocol stack. For specific operations that can be performed by the processing unit 320, refer to a detailed processing process of a corresponding operation performed on the second device side in the foregoing embodiment shown in FIG. 2 to FIG. 5, for example, detailed processing processes in step S130, S 160, and S202 to S204. Details are not described herein again.

According to the communications device 300 provided in Embodiment 3 of this application, the data packets of the target data flow are distributed to different physical links for sending, instead of being sent through one physical link, so that bandwidth provided by different physical links can be effectively used, and a packet loss rate is reduced.

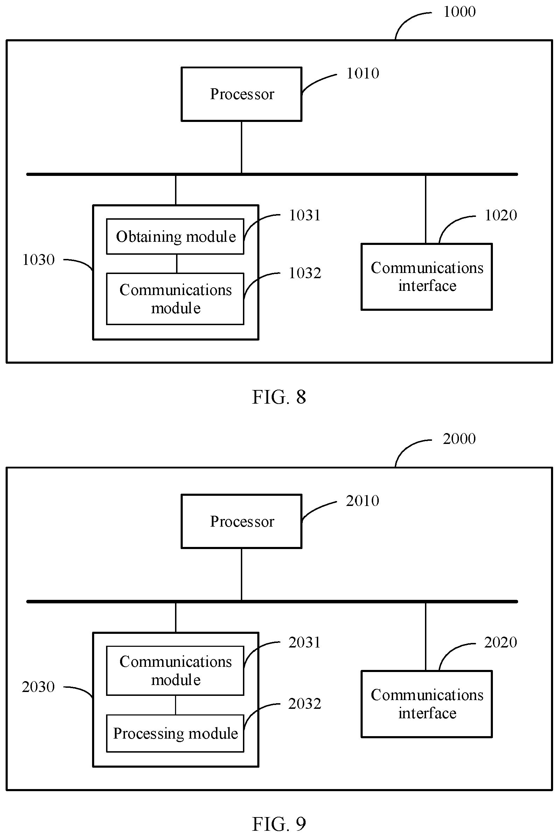

According to Embodiment 1 of this application, Embodiment 4 of this application provides a communications device 1000. As shown in FIG. 8, the communications device 1000 includes a processor 10 10 and a plurality of communications interfaces 1020.

The processor 1010 is configured to implement an operation performed by the first device in the method 100 provided in Embodiment 1 of this application. The processor 1010 communicates with another device through the communications interface 1020 when communicating with the another device. The processor 1010 may be specifically a central processing unit (central processing unit, CPU), or an application-specific integrated circuit (Application-specific Integrated Circuit, ASIC), or may be configured as one or more integrated circuits that implement the embodiments of this application.

As shown in FIG. 8, the communications device 1000 may further include a memory 1030. The processor 1010 and the memory 1030 may implement mutual communication through a bus. The memory 1030 is configured to store a computer operation instruction, and may be specifically a high-speed random access memory (Random Access Memory, RAM), or may be a non-volatile memory (non-volatile memory). The processor 1010 may specifically execute the computer operation instruction stored in the memory 1030, and the processor 1010 executes the computer operation instruction, so that the communications device 1000 performs an operation performed by the first device in the method described in Embodiment 1, for example, obtains data packets of a target data flow; and sends the data packets of the target data flow to the receiving device through physical links corresponding to at least two of the plurality of communications interfaces in a load balancing mode, where each sent data packet of the target data flow carries a primary sequence number, the sent data packets of the target data flow have consecutive primary sequence numbers, and the primary sequence numbers are used by the receiving device to order data packets that are received from different physical links and that belong to the target data flow. In specific implementation, the memory 1030 may include an obtaining module 1031 and a communications module 1032, respectively configured to store functions used to implement the obtaining unit 210 and the communications unit 220 shown in FIG. 6. Correspondingly, the processor 1010 specifically executes the instruction in the obtaining module 1031, to implement a function of the obtaining unit 210, and executes the instruction in the communications module 1032, to implement a function of the communications unit 220. For specific operations that can be performed by each unit in the communications device 1000, refer to a detailed processing process of a corresponding operation performed on a first device side in the foregoing embodiment shown in FIG. 2 to FIG. 5. Details are not described herein again.

According to the communications device 1000 provided in Embodiment 4 of this application, the data packets of the target data flow are distributed to different physical links for sending, instead of being sent through one physical link, so that bandwidth provided by different physical links can be effectively used, and a packet loss rate is reduced.

According to Embodiment 1 of this application, Embodiment 5 of this application provides a communications device 2000. As shown in FIG. 9, the communications device 2000 includes a processor 2010 and a plurality of communications interfaces 2020.

The processor 2010 is configured to implement an operation performed by the second device in the method 100 provided in Embodiment 1 of this application. The processor 2010 communicates with another device through the communications interface 2020 when communicating with the another device. The processor 2010 may be specifically a CPU, or an ASIC, or one or more integrated circuits that are configured to implement this embodiment of the present invention.

As shown in FIG. 9, the communications device 2000 may further include a memory 2030. The processor 2010 and the memory 2030 may implement mutual communication through a bus. The memory 2030 is configured to store a computer operation instruction, and may be specifically a RAM, or may be a nonvolatile memory. The processor 2010 may specifically execute the computer operation instruction stored in the memory 2030, and the processor 2010 executes the computer operation instruction, so that the communications device 2000 performs the operations performed by the second device in the method described in Embodiment 1. In specific implementation, the memory 2030 may include a communications module 2031 and a processing module 2032, respectively configured to store functions used to implement the communications unit 310 and the processing unit 320 shown in FIG. 7. Correspondingly, the processor 2010 specifically executes the instruction in the communications module 2031, to implement a function of the communications unit 310, and executes the instruction in the communications module 2032, to implement a function of the communications unit 310. For specific operations that can be performed by each unit in the communications device 2000, refer to a detailed processing process of a corresponding operation performed on a second device side in the foregoing embodiment shown in FIG. 2 to FIG. 5. Details are not described herein again.

According to the communications device 2000 provided in Embodiment 5 of this application, the data packets of the target data flow are distributed to different physical links for sending, instead of being sent through one physical link, so that bandwidth provided by different physical links can be effectively used, and a packet loss rate is reduced.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium, or may be transmitted from one computer readable storage medium to another computer readable storage medium. The computer readable storage medium may be any available medium accessible to a computer. The usable medium may be a magnetic medium (for example, a floppy disk, a hard disk, or a magnetic tape), an optical medium (for example, a DVD), a semiconductor medium (for example, a solid state disk (SSD)), or the like.

## Claims

1. A data transmission method, wherein the method comprises:
obtaining, by a sending device, data packets of a target data flow; and
sending, by the sending device, the data packets of the target data flow to a receiving device through at least two physical links between the sending device and the receiving device in a load balancing mode, wherein each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow.

2. The method according to claim 1, wherein each data packet that is of the target data flow and that is sent by the sending device in the load balancing mode further carries a subsequence number, and data packets of the target data flow that are sent through any one of the at least two physical links have consecutive subsequence numbers.

3. The method according to claim 1 or 2, wherein the primary sequence number of each data packet of the target data flow is carried in an extension header between a data link layer header and a network layer header that are of the data packet.

4. The method according to any one of claims 1 to 3, wherein the method further comprises: adjusting, by the sending device based on at least one of the following information, a data amount that is of the target data flow and that is sent through each physical link:
a transmission rate of the target data flow in a statistics period; and
load information of each of the at least two physical links.

5. The method according to claim 4, wherein the load information of each physical link comprises predicted queue utilization, obtained after preset duration, of a data sending queue that is of the physical link and that is corresponding to the target data flow.

6. The method according to any one of claims 1 to 5, wherein the target data flow consists of a data flow of one or more preset services, or a 5-tuple of the target data flow is a preset 5-tuple.

7. A data transmission method, wherein the method comprises:
receiving, by a receiving device through at least two physical links between the receiving device and a sending device, data packets of a target data flow that are sent by the sending device through the at least two physical links in a load balancing mode, wherein each data packet that is of the target data flow and that is sent by the sending device in the load balancing mode carries a primary sequence number, and the data packets of the target data flow that are sent by the sending device have consecutive primary sequence numbers; and
ordering, by the receiving device, received data packets of the target data flow based on primary sequence numbers of the received data packets of the target data flow.

8. The method according to claim 7, wherein the primary sequence number of each data packet of the target data flow is carried in an extension header between a data link layer header and a network layer header that are of the data packet.

9. The method according to claim 7 or 8, wherein the ordering received data packets of the target data flow based on primary sequence numbers of the received data packets of the target data flow comprises: performing out-of-order detection on the target data flow based on the primary sequence numbers of the received data packets of the target data flow, and ordering the received data packets of the target data flow based on an out-of-order detection result.

10. The method according to claim 9, wherein the performing out-of-order detection on the target data flow based on the primary sequence numbers of the received data packets of the target data flow comprises: performing out-of-order detection on the target data flow based on the primary sequence numbers of the received data packets of the target data flow and a packet loss status of the target data flow.

11. The method according to claim 10, wherein each data packet that is of the target data flow and that is sent by the sending device in the load balancing mode further carries a subsequence number, and data packets of the target data flow that are sent through each physical link have consecutive subsequence numbers; and
the method further comprises: detecting, by the sending device, the packet loss status of the target data flow based on a subsequence number of a received data packet of the target data flow.

12. The method according to claim 9, wherein the performing out-of-order detection on the target data flow based on the primary sequence numbers of the received data packets of the target data flow comprises:
for a received current data packet of the target data flow, determining, based on a primary sequence number of the current data packet and a primary sequence number of a reference data packet, whether the current data packet is out of order, wherein the reference data packet is a data packet that has a largest primary sequence number in the target data flow and that is received before the current data packet is received.

13. The method according to claim 12, wherein the determining, based on a primary sequence number of the current data packet and a primary sequence number of a reference data packet, whether the current data packet is out of order comprises:
when it is determined that the current data packet and the reference data packet are from different physical links, and the primary sequence number of the current data packet and the primary sequence number of the reference data packet are inconsecutive, determining that the current data packet is out of order.

14. The method according to claim 12, wherein the determining, based on a primary sequence number of the current data packet and a primary sequence number of a reference data packet, whether the current data packet is out of order comprises: when it is determined that the current data packet and the reference data packet are from a same physical link and it is determined that a first quantity of sent packets is greater than a first quantity of lost packets, determining that the current data packet is out of order, wherein the first quantity of sent packets is a quantity of data packets that are sent by the sending device, that belong to the target data flow, and whose primary sequence numbers are greater than the primary sequence number of the reference data packet and less than the primary sequence number of the current data packet, and the first quantity of lost packets is a quantity of data packets that are lost on the physical link and that are in the data packets that are sent by the sending device, that belong to the target data flow, and whose primary sequence numbers are greater than the primary sequence number of the reference data packet and less than the primary sequence number of the current data packet.

15. The method according to claim 14, wherein each data packet that is of the target data flow and that is sent by the sending device in the load balancing mode further carries a subsequence number, and data packets of the target data flow that are sent through each physical link have consecutive subsequence numbers; and
the determining that a first quantity of sent packets is greater than a first quantity of lost packets comprises: determining that a difference between the primary sequence number of the current data packet and the primary sequence number of the reference data packet is greater than a difference between a subsequence number of the current data packet and a subsequence number of the reference data packet.

16. The method according to any one of claims 12 to 15, wherein when determining that a reorder buffer corresponding to the target data flow is empty, the receiving device performs the operation of determining, based on a primary sequence number of the current data packet and a primary sequence number of a reference data packet, whether the current data packet is out of order.

17. A communications device, wherein the communications device comprises an obtaining unit and a communications unit, wherein
the obtaining unit is configured to obtain data packets of a target data flow; and
the communications unit is configured to send the data packets of the target data flow to a receiving device through at least two physical links between the communications device and the receiving device in a load balancing mode, wherein each data packet that is of the target data flow and that is sent in the load balancing mode carries a primary sequence number, the sent data packets of the target data flow have consecutive primary sequence numbers, and the primary sequence numbers are used by the receiving device to order data packets that are received from different physical links and that belong to the target data flow.

18. The communications device according to claim 17, wherein each data packet that is of the target data flow and that is sent by the communications device in the load balancing mode further carries a subsequence number, and data packets of the target data flow that are sent through any one of the at least two physical links have consecutive subsequence numbers.

19. The communications device according to claim 17 or 18, wherein the primary sequence number of each data packet of the target data flow is carried in an extension header between a data link layer header and a network layer header that are of the data packet.

20. The communications device according to any one of claims 17 to 19, wherein the communications unit is further configured to adjust, based on at least one of the following information, a data amount that is of the target data flow and that is sent through each physical link:
a transmission rate of the target data flow in a statistics period; and
load information of each of the at least two physical links.

21. The communications device according to claim 20, wherein the load information of each physical link comprises predicted queue utilization, obtained after preset duration, of a data sending queue that is of the physical link and that is corresponding to the target data flow.

22. The communications device according to any one of claims 17 to 21, wherein the target data flow consists of a data flow of one or more preset services, or a 5-tuple of the target data flow is a preset 5-tuple.

23. A communications device, wherein the communications device comprises a communications unit and a processing unit, wherein
the communications unit is configured to receive, through at least two physical links between the communications device and a sending device, data packets of a target data flow that are sent by the sending device through the at least two physical links in a load balancing mode, wherein each data packet that is of the target data flow and that is sent by the sending device in the load balancing mode carries a primary sequence number, and the data packets of the target data flow that are sent by the sending device have consecutive primary sequence numbers; and
the processing unit is configured to order, based on primary sequence numbers of data packets of the target data flow that are received by the communications unit, the received data packets of the target data flow.

24. The communications device according to claim 23, wherein the primary sequence number of each data packet of the target data flow is carried in an extension header between a data link layer header and a network layer header that are of the data packet.

25. The communications device according to claim 23 or 24, wherein the processing unit is specifically configured to: perform out-of-order detection on the target data flow based on the primary sequence numbers of the received data packets of the target data flow, and order the received data packets of the target data flow based on an out-of-order detection result.

26. The communications device according to claim 25, wherein the processing unit is specifically configured to: perform out-of-order detection on the target data flow based on the primary sequence numbers of the received data packets of the target data flow and a packet loss status of the target data flow.

27. The method according to claim 26, wherein each data packet that is of the target data flow and that is sent by the sending device in the load balancing mode further carries a subsequence number, and data packets of the target data flow that are sent through each physical link have consecutive subsequence numbers; and
the processing unit is further configured to detect the packet loss status of the target data flow based on a subsequence number of a received data packet of the target data flow.

28. The communications device according to claim 25, wherein the performing out-of-order detection on the target data flow based on the primary sequence numbers of the received data packets of the target data flow comprises:
for a received current data packet of the target data flow, the processing unit determines, based on a primary sequence number of the current data packet and a primary sequence number of a reference data packet, whether the current data packet is out of order, wherein the reference data packet is a data packet that has a largest primary sequence number in the target data flow and that is received before the current data packet is received.

29. The communications device according to claim 28, wherein the processing unit is specifically configured to: when it is determined that the current data packet and the reference data packet are from different physical links, and the primary sequence number of the current data packet and the primary sequence number of the reference data packet are inconsecutive, determining that the current data packet is out of order.

30. The communications device according to claim 28, wherein the processing unit is specifically configured to: when it is determined that the current data packet and the reference data packet are from a same physical link and it is determined that a first quantity of sent packets is greater than a first quantity of lost packets, determine that the current data packet is out of order, wherein the first quantity of sent packets is a quantity of data packets that are sent by the sending device, that belong to the target data flow, and whose primary sequence numbers are greater than the primary sequence number of the reference data packet and less than the primary sequence number of the current data packet, and the first quantity of lost packets is a quantity of data packets that are lost on the physical link and that are in the data packets that are sent by the sending device, that belong to the target data flow, and whose primary sequence numbers are greater than the primary sequence number of the reference data packet and less than the primary sequence number of the current data packet.

31. The communications device according to claim 30, wherein each data packet that is of the target data flow and that is sent by the sending device in the load balancing mode further carries a subsequence number, and data packets of the target data flow that are sent through each physical link have consecutive subsequence numbers; and
the determining that a first quantity of sent packets is greater than a first quantity of lost packets comprises: determining that a difference between the primary sequence number of the current data packet and the primary sequence number of the reference data packet is greater than a difference between a subsequence number of the current data packet and a subsequence number of the reference data packet.

32. The communications device according to any one of claims 28 to 31, wherein the processing unit is specifically configured to: when determining that a reorder buffer corresponding to the target data flow is empty, perform the operation of determining, based on a primary sequence number of the current data packet and a primary sequence number of a reference data packet, whether the current data packet is out of order.

33. A communications system, wherein the communications system comprises a sending device and a receiving device, wherein
the sending device is the communications device according to any one of claims 17 to 22; and
the receiving device is the communications device according to any one of claims 23 to 32.

34. A computer readable storage medium, comprising an instruction, wherein when the instruction is run on a computer, the computer is enabled to perform the method according to any one of claims 1 to 16.
